# EUROPEAN PATENT SPECIFICATION

(11) **EP 2 703 973 B1**
(45) Date of publication and mention of the grant of the patent: **20.07.2016**
(21) Application number: 13168996.0
(22) Date of filing: 23.05.2013
(51) Int. Cl.: G06F 3/048, H04N 5/44, H04N 21/41, H04N 21/422

(54) **Display apparatus and method of controlling the same**
Anzeigevorrichtung und Steuerungsverfahren dafür
Appareil d'affichage et son procédé de contrôle

(30) Priority: 31.08.2012 KR 20120096715
(43) Date of publication of application: 05.03.2014
(73) Proprietor: Samsung Electronics Co., Ltd, Gyeonggi-do 443-742 (KR)
(72) Inventor: Lee, La-ya, Gyeonggi-do (KR)
(74) Representative: Appleyard Lees IP LLP

(56) References cited:
- US-A1- 2001 035 860
- US-A1- 2010 169 842
- US-A1- 2010 229 125
- US-A1- 2012 057 081
- US-A1- 2012 062 471

## Description

### BACKGROUND

### Field

Apparatuses and methods consistent with the exemplary embodiments relate to a display apparatus and a method of controlling the same, more particularly to a display apparatus providing an intuitive user directory interface to a user, and a method of controlling the same.

### Description of the Related Art

A display apparatus, such as a digital TV, provides an interface for a user to save a favorite channel or program or a frequently used function into a preference list.

However, an interface of a conventional display apparatus inconveniently involves a plurality of stages to set a preference list, or does not allow a user to actively manipulate the interface as they wish, only enabling passive use of the interface.

US2012/0057081 discloses gesture based control of an IPTV system.

US2012/0229125 discloses a display apparatus for providing a user menu.

### SUMMARY

An aspect of one or more exemplary embodiments is to provide a display apparatus providing a user interface to enable a user to intuitively and easily add, delete, and change a favorite function using a touch-based remote control, and a method of controlling the same.

The foregoing and/or other aspects may be achieved by providing a display apparatus including: a signal receiver configured to receive an image signal; a signal processor configured to process the image signal; a display unit which displays an image based on the processed image signal; a communicator configured to receive information on a motion corresponding to an instruction of a user from a remote control, the motion being a gesture input by the user by means of a touch pad on a remote control unit; and a controller configured to display a graphic interface characterized by comprising a list of favourite content or favourite functions, the graphic interface appearing on an area on the display unit and control to add a broadcast channel which is currently displayed or a menu corresponding to a function of the display apparatus which is currently displayed to the graphic interface based on a direction of the motion, the direction of the motion being in an entering direction to the interface;
the added broadcast channel or menu function appearing in the interface as an item in a thumbnail form or as an item in an icon form.

### BRIEF DESCRIPTION OF THE DRAWINGS

The above and/or other aspects will become apparent and more readily appreciated from the following description of the exemplary embodiments, taken in conjunction with the accompanying drawings, in which:
FIG. 1 is a block diagram of a display apparatus according to an exemplary embodiment.
FIG. 2 schematically illustrates that an image being displayed on the display apparatus is added to a user directory interface as an item in a thumbnail form by inputting a motion to a remote control unit according to an exemplary embodiment.
FIG. 3 schematically illustrates that a menu displayed on the display apparatus is added to the user directory interface as an item in an icon by inputting a motion to the remote control unit according to an exemplary embodiment.
FIG. 4 schematically illustrates that a function corresponding to an item listed on the user directory interface is executed by inputting a motion to the remote control unit according to an exemplary embodiment.
FIG. 5 schematically illustrates that an item listed on the user directory interface is deleted by inputting a motion to the remote control unit according to an exemplary embodiment.
FIG. 6 schematically illustrates that a selection is made among the items listed on the user directory interface by inputting a motion to the remote control unit according to an exemplary embodiment.
FIG. 7 is a flowchart illustrating a method of controlling a display apparatus according to an exemplary embodiment.

### DETAILED DESCRIPTION OF EXEMPLARY EMBODIMENTS

Hereinafter, exemplary embodiments will be described in detail with reference to accompanying drawings.

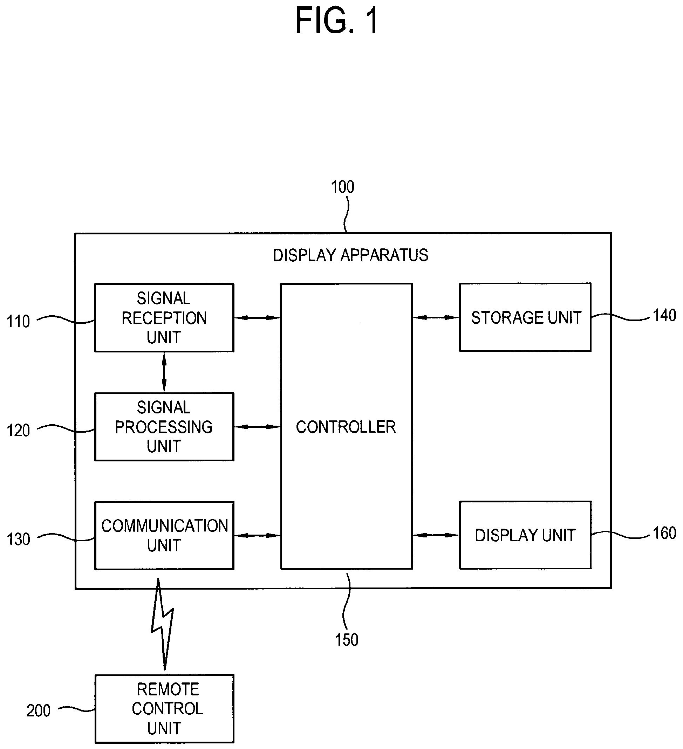

FIG. 1 is a block diagram of a display apparatus according to an exemplary embodiment.

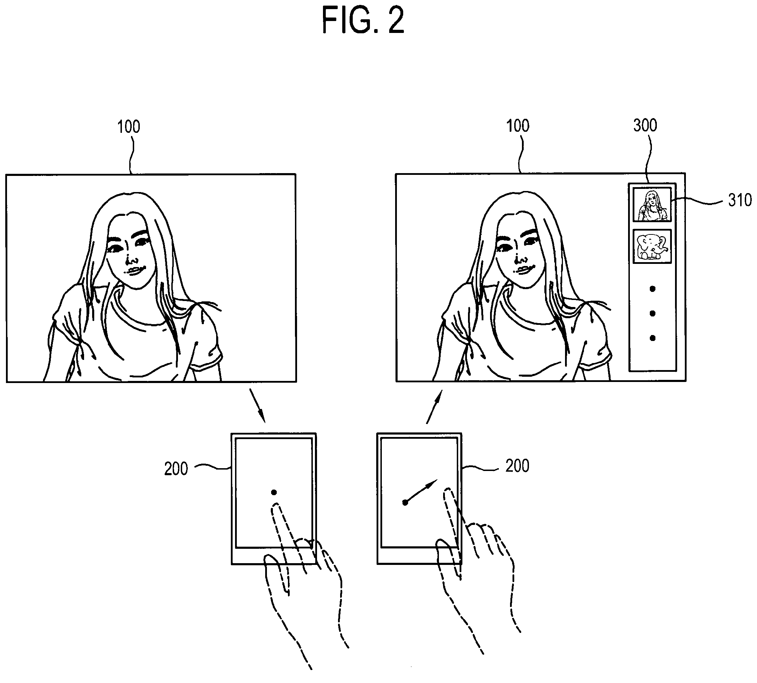

As shown in FIG. 1, the display apparatus 100 according to the present exemplary embodiment includes a signal reception unit 110 receiving an image signal, a signal processing unit 120 processing the image signal, a display unit 160 displaying an image based on the processed image signal, a communication unit 130 receiving an instruction corresponding to a motion from a remote control unit 200, and a controller 150 displaying a user directory interface 300 (shown in Fig. 2) having a predetermined area on the display unit 160 and controlling the user directory interface 300 so that a user desired function is selectively displayed on the user directory interface 300 among functions performed by the display apparatus 100 based on a direction of the motion from the remote control unit 200 to the user directory interface 300. The controller may include a central processing unit (CPU) or processor core configured to perform the functions and/or operations of the controller as described herein.

In the present exemplary embodiment, the display apparatus 100 may be provided as a digital television (DTV) capable of receiving and displaying a broadcast signal from a broadcasting station, without being limited thereto.

The signal reception unit 110 receives an image signal, such as a broadcast signal, from the outside.

The signal processing unit 120 processes the image signal received from the outside to be displayed on the display unit 160.

The communication unit 130 receives an instruction from the remote control unit 200.

The display unit 160 receives the image signal processed by the signal processing unit 120 to display an image.

The controller 150 displays the user directory interface 300 having the predetermined area on the display unit 160 in accordance with an instruction transmitted from the remote control unit 200 through the communication unit 130 and controls the user directory interface 300 so that a user desired function is selectively displayed on the user directory interface 300 among functions performed by the display apparatus 100 based on a direction of a motion from the remote control unit 200 to the user directory interface 300.

The remote control unit 200 receives input of a user motion in touch mode and transmits the input to the communication unit 130 of the display apparatus. The user may input a motion, such as touching, drawing, throwing, and tilting, through the remote control unit 200. In addition, the motion may include any motion to be input according to an intuitive instruction given by the user.

The user directory interface 300 may be displayed in a region of the display unit 130, overlapping an image currently displayed on the display unit 130, when the user touches the remote control unit 200. The user directory interface 300 may list items 310, such as a broadcast of a user favorite channel, a particular channel, and a menu. Such items correspond to functions to be performed by the display apparatus 100 and may be displayed as a thumbnail obtained by capturing an image being displayed on the display unit 160, a thumbnail corresponding to a program being displayed on the display unit 160 provided by a broadcasting company, or an icon corresponding to a selectable menu. The user inputs a motion through the remote control unit 200, thereby adding, deleting, or changing such items on the user directory interface 300. Adding, deleting or changing these items are realized in accordance with the direction of the motion input by the user through the touch-based remote control unit 200. The direction may include an entering direction to the user directory interface 300, an exit direction from the user directory interface 300, and a moving direction within the region of the user directory interface 300 based on the displayed user directory interface 300.

For example, the items 310 corresponding to a user's favorite functions to be performed by the display apparatus 100 may be added, deleted or changed as follows.

FIG. 2 schematically illustrates that an image being displayed on the display apparatus is added to the user directory interface as an item in a thumbnail form by inputting a motion to the remote control unit according to an exemplary embodiment.

Referring to FIG. 2, the user may immediately add a channel currently viewed to the user directory interface 300 as a thumb nail using a touch-and-draw method supported by the touch-based remote control unit 200. Applying a touch-and-draw method to the touch-based remote control unit 200 may include touching the display of the remote control unit and moving a finger while maintaining contact with the display of the remote control unit. When the user wishes to add a currently viewed channel to the user directory interface 300, the user lightly touches the touch-based remote control unit 200. Then, the user directory interface 300 appears with a predetermined area on the display unit 160 of the display apparatus 100. Here, the user directory interface 300 may be disposed on any side among four sides of the display unit 160. In the present exemplary embodiment, the user directory interface 300 is displayed with a predetermined area on a right side of the display unit 160, overlapping, in a translucent style, a currently displayed image. However, the user directory interface 300 may be provided in an opaque form or to be adjusted in transparency, without being limited to the translucent style. While the user directory interface 300 is displayed, the user touches and draws the current channel through the remote control unit 200 to input the motion as described above, for example, moving an image being displayed according to the current channel on the display unit 160 in an entering direction to the user directory interface 300 or a moving direction within the region of the user directory interface 300, thereby inputting an instruction to add the current channel to the user directory interface 300. Then, a thumbnail 310 corresponding to the channel is added to and registered in the user directory interface 300. Likewise, to register a different channel in the user directory interface 300 after turning in to the channel, the user may add the channel as a next item 310 of the user directory interface 300 through touch-and-draw input using the remote control unit 200. As described above, the thumbnail 310 may be obtained by capturing a program of a selected current channel or provided by a broadcasting company.

Meanwhile, a function of the display apparatus 100 added to the user directory interface 300, that is, an item, is not limited to a broadcast or a channel currently displayed. In addition to the broadcast or channel, the user may add a menu corresponding to a frequently used function supported by the display apparatus 100 to the user directory interface 300 as a shortcut icon using the touch-based remote control unit 200.

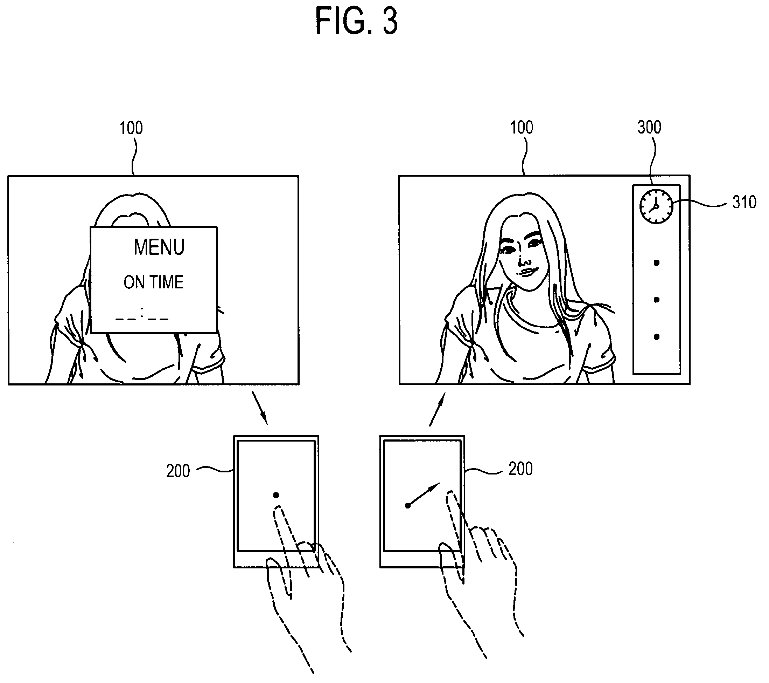

FIG. 3 schematically illustrates that a menu displayed on the display apparatus 100 is added to the user directory interface 300 as an item in the form of icon by inputting a motion to the remote control unit 200 according to an exemplary embodiment.

Likewise in an operation of adding a broadcast or a channel, the user may immediately add a menu corresponding to a function of the display apparatus 100 to the user directory interface 300 as an item 310 in the form of an icon using the touch-and-draw method supported by the touch-based remote control unit 200. When the user frequently uses a morning wake-up call function on the menu corresponding to the function of the display apparatus 100, the user may register the morning wake-up call function in the user directory interface 300. A conventional morning wake-up call function is set via menu, setting, time, and morning call stages. However, in the present embodiment, the user draws a morning wake-up call item on the menu, which is being activated, to the user directory interface 300 using the touch-based remote control device 200, thereby easily registering an icon 310 corresponding to the morning wake-up call in the user directory interface 300 and conveniently running the morning wake-up call by presenting the user directory interface 300 in which the morning wake-up call item 310 is registered as necessary.

As described above, items 310, for example, a channel, a broadcast, and a morning wake-up call function, added and registered in the user directory interface 300 appear again, when the user touches the touch-based remote control unit 200, and disappear after a predetermined time so as not to disturb viewing the display apparatus. This method is even more convenient than a conventional method of adding a channel to a favorite list and changing to the channel among favorite channels registered in advance or finding an item from a menu and directly accessing the item, and, additionally, provides the user with fun activity.

Meanwhile, the display apparatus 100 according to the present exemplary embodiment may further include a storage unit 140. The storage unit 140 may store setting information on the user directory interface 300 and the functions of the display apparatus 100 registered in the user directory interface 300.

The functions of the display apparatus 100 registered in the user directory interface 300 are executed as follows.

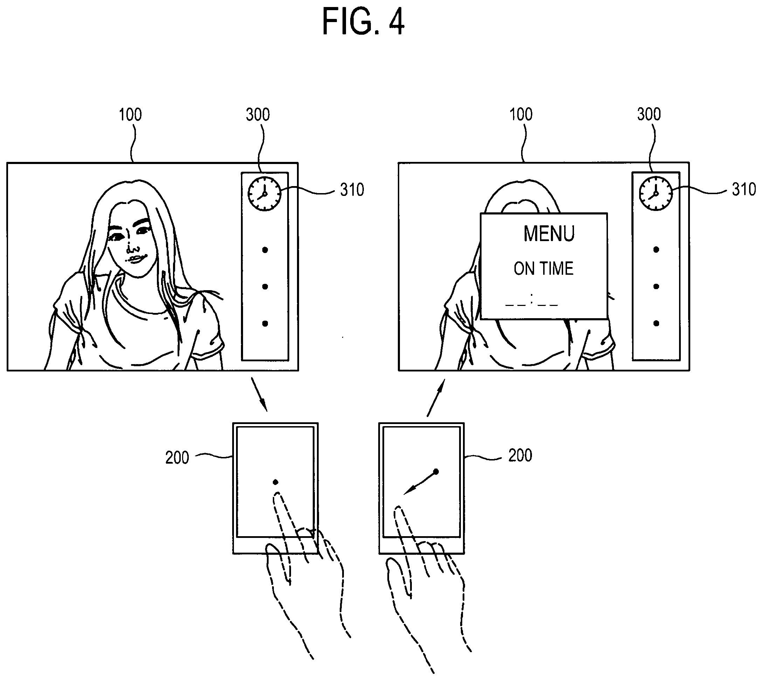

FIG. 4 schematically illustrates that a function corresponding to an item 310 listed on the user directory interface 300 is executed by inputting a motion to the remote control unit 200 according to an exemplary embodiment.

Referring to FIG. 4, to immediately execute the function 310 registered in the user directory interface 300, the user, the user touches the selected item using the touch-based remote control unit 200 and draws the item from the user directory interface 300 in a direction toward a center of a screen, that is, an opposite direction to a draw direction when adding and registering an item, thereby simply executing the function. That is, the user inputs a touch-and-draw motion using the touch-based remote control unit 200, thereby easily executing the functions 310 registered in the user directory interface 300.

Likewise, when the user wishes to change between the channels 310 registered in the user directory interface 300, the touch-and-draw method may be also used to easily change to a channel. In detail, the user selects a new channel by touching the remote control unit 200 and draws the channel in the direction toward the center of the screen, thereby changing to the channel.

Further, the functions of the display apparatus 100 which are registered in the user directory interface 300 may be deleted as follows.

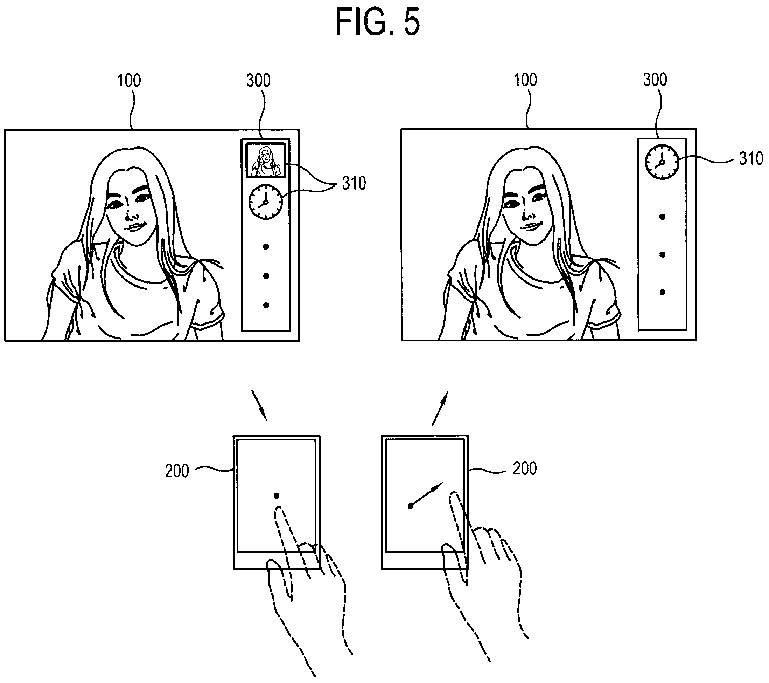

FIG. 5 schematically illustrates that the item 310 listed on the user directory interface 300 is deleted by inputting a motion to the remote control unit 200 according to an exemplary embodiment.

Referring to FIG. 5, to delete a registered item from the user directory interface 300, the user touches a selected item using the touch-based remote control unit 200 and throws the item from the user directory interface 300, in an outward direction, that is, an opposite direction to the direction toward the center of the screen, thereby easily deleting the item. That is, the user inputs a touch-and-throw motion using the touch-based remote control unit 200, thereby easily deleting the functions 310 registered in the user directory interface 300.

Further, the functions of the display apparatus 100 registered in the user directory interface 300 may be changed as follows.

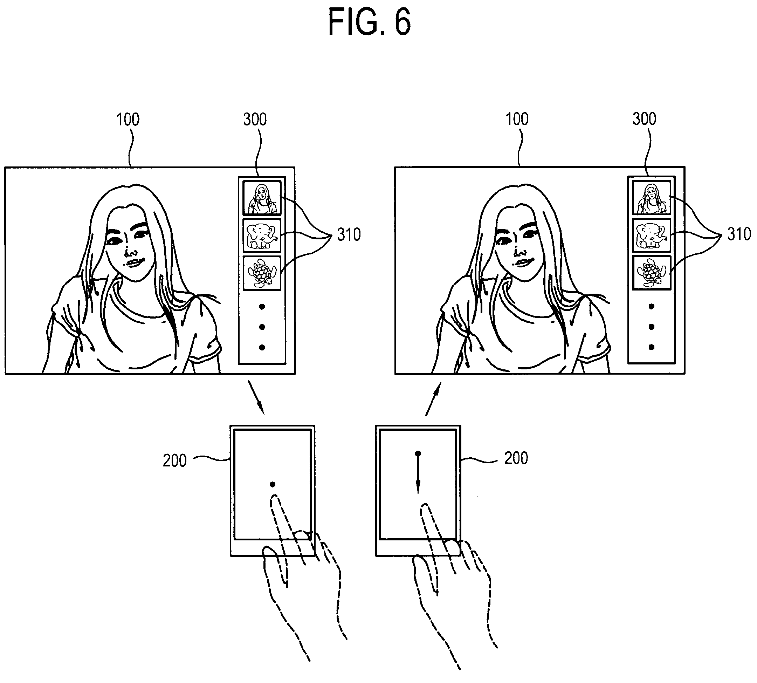

FIG. 6 schematically illustrates that a selection is made among the items 310 listed on the user directory interface 300 by inputting a motion to the remote control unit 200 according to an exemplary embodiment.

Referring to FIG. 6, when the user directory interface 300 is displayed in a long bar vertically on a left or right side of the display unit 160, the user may select one of the registered items by drawing up and down within the user directory interface 300 using the touch-based remote control unit 200. Alternatively, the user directory interface 300 is displayed in a long bar horizontally on an upper or lower side of the display unit 160, the user may selects one of the registered items by drawing right and left within the user directory interface 300 using the touch-based remote control unit 200.

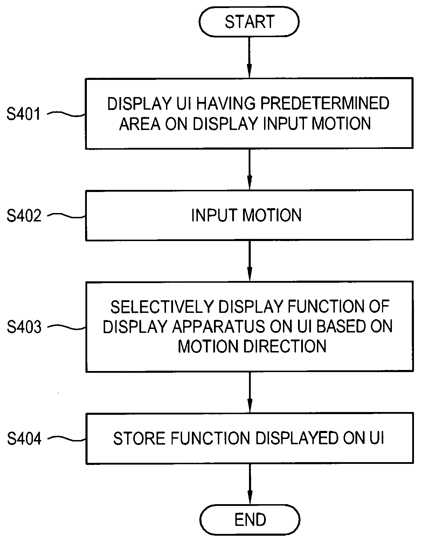

FIG. 7 is a flowchart illustrating a method of controlling a display apparatus according to an exemplary embodiment.

According to the method according to the present exemplary embodiment, a user directory interface having a predetermined area is displayed on the display unit when a touch input of the user is received through the touch-based remote control unit (S401). When a motion of the user is input through the remote control unit (S402) while the user directory interface having the predetermined area is displayed on the display unit, a function of the display apparatus is selectively displayed on the user directory interface based on a direction of the motion, that is, the function is added, deleted, or changed (S403). Then, the function displayed on the user directory interface is stored (S404).

As described above, according to one or more exemplary embodiments, a user may generate and manage a desired favorite list. Above all, the user may be provided with an intuitive user directory interface, thereby actively managing the list.

Further, the user registers, changes, and deletes a program and registers frequently used functions as a list through the user directory interface, thereby enabling quick access to the functions.

Although a few exemplary embodiments have been shown and described, it will be appreciated by those skilled in the art that changes may be made in these exemplary embodiments without departing from the principles of the invention, the scope of which is defined in the appended claims and their equivalents.

## Claims

1. An apparatus (100) comprising:
a signal receiver (110) configured to receive an image signal;
a signal processor (120) configured to process the image signal;
a display unit (160) which displays an image based on the processed image signal;
a communicator (130) configured to receive information on a motion corresponding to an instruction of a user from a remote control (200), the motion being a gesture input by the user by means of a touchpad on a remote control unit; and
a controller (150) configured to display a graphic interface **characterised by** comprising a list of favourite content or favourite functions, the graphic interface appearing on an area on the display unit and control to add a broadcast channel which is currently displayed or a menu corresponding to a function of the display apparatus which is currently displayed to the graphic interface based on a direction of the motion, the direction of the motion being in an entering direction to the interface;
the added broadcast channel or menu function appearing in the interface as an item in a thumbnail form or as an item in an icon form.

2. The apparatus (100) of claim 1, wherein the motion comprises at least one from among a motion in an entering direction to the interface, a motion in an exit direction from the interface, and a motion within the region of the interface.

3. The apparatus (100) of claim 1, wherein the region of the interface comprises a region in which items corresponding to the plurality of functions are listed and displayed.

4. The apparatus (100) of claim 3, wherein the items are displayed as a thumbnail obtained by capturing the image being displayed on the display unit (160).

5. The apparatus (100) of claim 3, wherein the items are displayed as a thumbnail corresponding to the image being displayed on the display unit (160) provided by a broadcasting company.

6. The apparatus (100) of claim 3, wherein the items are displayed as an icon corresponding to a selectable menu.

7. The apparatus (100) of claim 1, wherein the items are added, deleted, or changed on the interface based on the direction of the motion.

8. The apparatus (100) of claim 1, wherein the motion comprises at least one from among touching, drawing, throwing, and tilting on the remote control (200).

9. The apparatus (100) of claim 8, wherein the interface is displayed on the display unit based on the touching on the remote control.

10. The apparatus (100) of claim 8, wherein the interface disappears after a predetermined time.

11. The apparatus (100) of claim 8, wherein the interface is displayed in a translucent style, overlapping the image displayed on the display unit (160).

12. The apparatus (100) of claim 1, further comprising a storage (140), wherein the storage stores information on the selected function.

13. A method of controlling an apparatus (100) comprising:
displaying a graphic interface having an area on a display unit (160), the graphic interface comprising a list of favourite content or favourite functions;
receiving input of a motion corresponding to an instruction of a user from a remote control unit (200), the motion being a gesture input by the user by means of a touchpad on a remote control unit; and
**characterised by** controlling to add a broadcast channel which is currently displayed or a menu corresponding to a function of the display apparatus which is currently displayed to the graphic interface based on a direction of the motion, the direction of the motion being in an entering direction to the interface;
the added broadcast channel or menu function appearing in the interface as an item in a thumbnail form or as an item in an icon form.

14. The method of claim 13, wherein the motion comprises at least one from among a motion in an entering direction to an interface, a motion in an exit direction from the interface, and a motion within the region of the interface.

15. The method of claim 13, further comprising storing information on the selected function.

## Patentansprüche

1. Vorrichtung (100), umfassend:
einen Signalempfänger (110), ausgelegt zum Empfangen eines Bildsignals;
einen Signalprozessor (120), ausgelegt zum Verarbeiten des Bildsignals;
eine Anzeigeeinheit (160), die auf der Basis des verarbeiteten Bildsignals ein Bild anzeigt;
einen Kommunikator (130), ausgelegt zum Empfangen von Informationen über eine Bewegung entsprechend einer Anweisung eines Benutzers von einer Fernbedienung (200), wobei die Bewegung eine Gesteneingabe durch den Benutzer mittels eines Touchpad auf einer Fernbedienungseinheit ist; und
eine Steuerung (150), ausgelegt zum Anzeigen einer grafischen Oberfläche, **dadurch gekennzeichnet, dass** sie eine Liste von favorisiertem Inhalt oder favorisierten Funktionen umfasst, wobei die grafische Oberfläche in einem Bereich auf der Anzeigeeinheit erscheint, und Steuern zum Hinzufügen eines ausgestrahlten Kanals, der gerade angezeigt wird, oder eines Menüs entsprechend einer Funktion der Anzeigevorrichtung, die gerade angezeigt wird, zu der grafischen Oberfläche auf der Basis einer Richtung der Bewegung, wobei die Richtung der Bewegung in einer Eintrittsrichtung in die Oberfläche liegt;
wobei der hinzugefügte ausgestrahlte Kanal oder die Menüfunktion in der Oberfläche als ein Posten in einer Miniaturbildform oder als Posten in einer Symbolform erscheint.

2. Vorrichtung (100) nach Anspruch 1, wobei die Bewegung mindestens eine der Folgenden umfasst: eine Bewegung in einer Eintrittsrichtung in die Oberfläche, eine Bewegung in einer Ausgangsrichtung aus der Oberfläche und eine Bewegung in der Region in der Oberfläche.

3. Vorrichtung (100) nach Anspruch 1, wobei die Region der Oberfläche eine Region umfasst, in der Posten entsprechend den mehreren Funktionen aufgelistet und angezeigt werden.

4. Vorrichtung (100) nach Anspruch 3, wobei die Posten als ein Miniaturbild angezeigt werden, das durch Erfassen des auf der Anzeigeeinheit (160) angezeigten Bildes erhalten wird.

5. Vorrichtung (100) nach Anspruch 3, wobei die Posten als ein Miniaturbild entsprechend dem Bild angezeigt werden, das gerade auf der Anzeigeeinheit (160) angezeigt wird, das durch eine ausstrahlende Firma bereitgestellt wird.

6. Vorrichtung (100) nach Anspruch 3, wobei die Posten als ein Symbol entsprechend einem auswählbaren Menü angezeigt werden.

7. Vorrichtung (100) nach Anspruch 1, wobei die Posten auf der Oberfläche auf der Basis der Richtung der Bewegung hinzugefügt, gelöscht oder geändert werden.

8. Vorrichtung (100) nach Anspruch 1, wobei die Bewegung mindestens eines der Folgenden umfasst:
Berühren, Zeichnen, Werfen und Neigen auf der Fernbedienung (200).

9. Vorrichtung (100) nach Anspruch 8, wobei die Oberfläche auf der Anzeigeeinheit auf der Basis des Berührens auf der Fernbedienung angezeigt wird.

10. Vorrichtung (100) nach Anspruch 8, wobei die Oberfläche nach einer vorbestimmten Zeit verschwindet.

11. Vorrichtung (100) nach Anspruch 8, wobei die Oberfläche in einem durchscheinenden Stil angezeigt wird und sich mit dem auf der Anzeigeeinheit (160) angezeigten Bild überlappt.

12. Vorrichtung (100) nach Anspruch 1, die ferner einen Speicher (140) umfasst, wobei der Speicher Informationen über die ausgewählte Funktion speichert.

13. Verfahren zum Steuern einer Vorrichtung (100), umfassend:
Anzeigen einer grafischen Oberfläche, die einen Bereich auf einer Anzeigeeinheit (160) aufweist, wobei die grafische Oberfläche eine Liste von favorisiertem Inhalt oder favorisierten Funktionen umfasst;
Empfangen von Eingaben einer Bewegung entsprechend einer Anweisung eines Benutzers von einer Fernbedienung (200), wobei die Bewegung eine Gesteneingabe durch den Benutzer mittels eines Touchpad auf einer Fernbedienungseinheit ist; und
**gekennzeichnet durch** Steuern zum Hinzufügen eines ausgestrahlten Kanals, der gerade angezeigt wird, oder eines Menüs entsprechend einer Funktion der Anzeigevorrichtung, die gerade angezeigt wird, zu der grafischen Oberfläche auf der Basis einer Richtung der Bewegung, wobei die Richtung der Bewegung in einer Eintrittsrichtung in die Oberfläche liegt;
wobei der hinzugefügte ausgestrahlte Kanal oder die Menüfunktion in der Oberfläche als ein Posten in einer Miniaturbildform oder als Posten in einer Symbolform erscheint.

14. Verfahren nach Anspruch 13, wobei die Bewegung mindestens eine der Folgenden umfasst: eine Bewegung in einer Eintrittsrichtung in die Oberfläche, eine Bewegung in einer Ausgangsrichtung aus der Oberfläche und eine Bewegung in der Region in der Oberfläche.

15. Verfahren nach Anspruch 13, das ferner Speichern von Informationen über die ausgewählte Funktion umfasst.

## Revendications

1. Dispositif (100) comprenant :
un récepteur de signal (110) configuré pour recevoir un signal d'image ;
un processeur de signal (120) configuré pour traiter le signal d'image ;
une unité d'affichage (160) qui affiche une image sur la base du signal d'image traité ;
un communicateur (130) configuré pour recevoir des informations sur un mouvement correspondant à une instruction d'un utilisateur provenant d'une télécommande (200), le mouvement étant un geste entré par l'utilisateur au moyen d'une touche tactile sur une unité de télécommande ; et
un contrôleur (150) configuré pour afficher une interface graphique **caractérisée en ce qu'**elle comprend une liste de contenus favoris ou de fonctions favorites, l'interface graphique apparaissant sur une zone de l'affichage et de la commande de façon à ajouter un canal de diffusion qui est actuellement affiché ou un menu correspondant à une fonction du dispositif d'affichage qui est actuellement affiché sur l'interface graphique sur la base de la direction du mouvement, la direction du mouvement étant une direction entrante vers l'interface ;
le canal de diffusion ajouté ou la fonction de menu ajoutée apparaissant dans l'interface comme un item sous la forme d'une miniature ou comme un item sous la forme d'une icône.

2. Dispositif (100) selon la revendication 1, dans lequel le mouvement comprend au moins l'un parmi un mouvement dans une direction entrante vers l'interface, un mouvement dans une direction de sortie depuis l'interface, et un mouvement à l'intérieur de la région de l'interface.

3. Dispositif (100) selon la revendication 1, dans lequel la région de l'interface comprend une région dans laquelle des items correspondant à la pluralité de fonctions sont listés et affichés.

4. Dispositif (100) selon la revendication 3, dans lequel les items sont affichés sous la forme d'une miniature obtenue par capture de l'image qui est affichée sur l'unité d'affichage (160).

5. Dispositif (100) selon la revendication 3, dans lequel les items sont affichés sous la forme d'une miniature correspondant à l'image qui est affichée sur l'unité d'affichage (160) fournie par une société de diffusion.

6. Dispositif (100) selon la revendication 3, dans lequel les items sont affichés sous la forme d'une icône correspondant à un menu sélectionnable.

7. Dispositif (100) selon la revendication 1, dans lequel les items sont ajoutés, supprimés ou changés sur l'interface sur la base de la direction du mouvement.

8. Dispositif (100) selon la revendication 1, dans lequel le mouvement comprend au moins l'un parmi un toucher, un retrait, un lancer, et une inclinaison de la télécommande (200).

9. Dispositif (100) selon la revendication 8, dans lequel l'interface est affichée sur l'unité d'affichage sur la base d'un toucher sur la télécommande.

10. Dispositif (100) selon la revendication 8, dans lequel l'interface disparaît après une période de temps prédéterminée.

11. Dispositif (100) selon la revendication 8, dans lequel l'interface est affichée avec un style translucide, en superposition sur l'image affichée sur l'unité d'affichage (160).

12. Dispositif (100) selon la revendication 1, comprenant en outre un stockage (140), dans lequel le stockage stocke des informations sur la fonction sélectionnée.

13. Procédé pour commander un dispositif (100) comprenant :
l'affichage d'une interface graphique ayant une zone sur une unité d'affichage (160), l'interface graphique comprenant une liste de contenus favoris ou de fonctions favorites ;
la réception de l'entrée d'un mouvement correspondant à une instruction d'un utilisateur provenant d'une unité de télécommande (200), le mouvement étant un geste entré par l'utilisateur au moyen d'une touche tactile sur une unité de télécommande ; et
**caractérisé par** une commande pour ajouter un canal de diffusion qui est actuellement affiché ou un menu correspondant à une fonction du dispositif d'affichage qui est actuellement affichée sur l'interface graphique sur la base de la direction du mouvement, la direction du mouvement étant une direction entrante vers l'interface ;
le canal de diffusion ajouté ou la fonction de menu ajoutée apparaissant dans l'interface comme un item sous la forme d'une miniature ou comme un item sous la forme d'une icône.

14. Procédé selon la revendication 13, dans lequel le mouvement comprend au moins l'un parmi un mouvement dans une direction entrante vers l'interface, un mouvement dans une direction de sortie depuis l'interface, et un mouvement à l'intérieur de la région de l'interface.

15. Procédé selon la revendication 13, comprenant en outre le stockage d'informations sur la fonction sélectionnée.
